# EUROPÄISCHE PATENTSCHRIFT

(11) **EP 0 356 778 B1**
(45) Veröffentlichungstag und Bekanntmachung des Hinweises auf die Patenterteilung: **19.10.1994**
(21) Anmeldenummer: 89114774.6
(22) Anmeldetag: 10.08.1989
(51) Int. Cl.: C07F 7/18

(54) **Lagerstabile wässrige Lösung von Alkyltrialkoxysilanen**
Storage-stable aqueous solution of alkyl trialkoxy silanes
Solution aqueuse d'alcoyltrialcoxy silanes stables pour stockage

(30) Priorität: 31.08.1988 DE 3829510
(43) Veröffentlichungstag der Anmeldung: 07.03.1990
(73) Patentinhaber: HÜLS AKTIENGESELLSCHAFT, 45764 Marl (DE)
(72) Erfinder: Hitze, Reiner , Dr., D-5210 Troisdorf (DE); Hass, Hans-Jürgen, Dr., D-5210 Troisdorf (DE)

(56) Entgegenhaltungen:
- DE-A- 3 631 834
- CHEMICAL ABSTRACTS, Band 108, 1988, Seite 72, Zusammenfassung Nr. 39416p, Columbus, Ohio, US; CA-A-1 223 098 (GENERAL ELECTRIC CO.) 16-06-1987

## Beschreibung

Die Erfindung betrifft stabile, unbrennbare, wäßrige Lösungen von Alkyltrialkoxysilanen, die Alkalialuminat und Alkalimetallhydroxid enthalten.

In der DE-PS 36 31 834 wird beschrieben, daß Lösungen von Trialkoxysilanen in Gegenwart von Wasser nur kurze Zeit, d. h. wenige Stunden, stabil sind. In Abhängigkeit von der Konzentration des Alkyltrialkoxysilans scheidet sich die Siliciumverbindung nach wenigen Stunden bis Tagen in Form von unlöslichen, öligen, polymeren Siloxanolen ab. Es wurde daher vorgeschlagen, solche Lösungen durch Zusatz von Alkalimetallsilikaten zu stabilisieren. Eine solche Stabilisierung ist jedoch nicht bei hohen Silankonzentrationen anwendbar.

Beim Einsatz von Alkyltrialkoxysilanen in wäßriger Lösung muß daher die Siliciumverbindung in Substanz zum Anwendungsort transportiert und dort verarbeitet werden. Dies bringt zum Beispiel durch die langen Zeiten, die zur Herstellung klarer, homogener Lösungen erforderlich sind, Verarbeitungsprobleme mit sich. Darüber hinaus sind Alkyltrialkoxysilane mit aliphatischen Resten, die 1 bis 4 Kohlenstoffatome enthalten, entzündliche Flüssigkeiten, deren Dampf mit Luft explosionsfähige Gemische bilden kann. Transport und Handhabung dieser Stoffe werden dadurch erschwert und aufwendige Sicherheitsmaßnahmen notwendig.

Es bestand daher die Aufgabe, zur Behebung der genannten Schwierigkeiten eine Formulierung zu finden, welche die Alkyltrialkoxysilane bereits in wäßriger Lösung enthält und eine verarbeitungstechnisch sinnvolle Stabilitätsdauer besitzt. Die wäßrige Lösung sollte die genannten Silane in einer hohen, wirtschaftlich sinnvollen Konzentration enthalten.

Diese Aufgabe wurde gelöst, indem eine lagerstabile wäßrige Lösung von Alkyltrialkoxysilanen entwickelt wurde, der als Stabilisatoren Alkalialuminat und Alkalimetallhydroxid zugesetzt sind. Es wurde überraschend gefunden, daß der Zusatz dieser Verbindungen die Stabilität wäßriger Lösungen von Alkyltrialkoxysilanen auch bei hohen Silankonzentrationen bewirkt. Die erhaltenen Lösungen können über mehrere Tage bis zu mehreren Monaten gelagert werden, ohne daß nennenswerte Veränderungen beobachtet werden. Die erfindungsgemäßen Lösungen können ohne Einfluß auf ihre Stabilität in ihrem pH-Wert verändert oder mehrere Stunden zum Sieden erhitzt werden.

Die Herstellung der erfindungsgemäßen Lösung erfolgt, indem man zuerst die Alkyltrialkoxysilane bzw. deren Gemische in Wasser löst. Dies kann z. B. unter Zugabe von katalytisch wirksamen Mengen organischer oder anorganischer Säuren geschehen. Diese Lösung mischt man nun mit einer wäßrigen Lösung von Alkalialuminat und Alkalihydroxid, die diese Stoffe in der gewünschten Menge enthält. Zur Herstellung der erfindungsgemäßen Lösungen ist es aber auch möglich, das Alkalialuminat und das restliche Alkalihydroxid in Lösung getrennt in der gewünschten Menge den Alkyltrialkoxysilan-Lösungen zuzugeben.

Als Alkalimetallaluminat-Lösungen eignen sich beispielsweise handelsübliche Natriumaluminat-Lösungen mit einem Molverhältnis Na₂O/Al₂O₃ von größer als 1,05. Auch entsprechende Kaliumaluminat-Lösungen können eingesetzt werden.

Die zur Herstellung der erfindungsgemäßen Lösungen geeigneten Alkyltrialkoxysilane entsprechen der allgemeinen Formel

R-Si(OR')₃ ,

in der R für einen aliphatischen Rest mit 1 bis 8 Kohlenstoffatomen und R′ für einen aliphatischen Rest mit 1 bis 4 Kohlenstoffatomen steht.

In einer besonderen Ausgestaltung der Erfindung liegt in der wäßrigen Lösung ein Gemisch von Alkyltrialkoxysilanen vor.

Die Stabilität der erfindungsgemäßen Lösungen wird von den Mengenverhältnissen der Silane zum Aluminat und dem Lösungsmittel Wasser bestimmt. Zweckmäßigerweise werden im Folgenden die Mengen an Silan als SiO₂ und an Aluminat als Al₂O₃ angegeben.

In den beanspruchten Lösungen ist erfindungsgemäß das Molverhältnis des Lösungsmittels Wasser zum gelösten Alkyltrialkoxysilan, angegeben als SiO₂, größer als 22 : 1 und das Molverhältnis SiO₂/Al₂O₃ kleiner oder gleich 17 : 1. Der bevorzugte Bereich liegt bei einem Molverhältnis SiO₂/Al₂O₃ kleiner oder gleich 15. Hier beträgt bei hohen Silankonzentrationen die Stabilität der Lösungen mehrere Tage bis mehrere Monate.

In einer bevorzugten Ausführungsform der Erfindung wird als Alkyltrialkoxysilan überwiegend ein Methyltrialkoxysilan eingesetzt.

Die erfindungsgemäßen Lösungen können überall dort angewendet werden, wo man die darin enthaltenen Silane als solche einsetzt.

Die Erfindung wird nachstehend anhand der Beispiele erläutert.

### Beispiele

In den nachfolgenden Beispielen 1 bis 7 werden die wäßrigen Lösungen der Alkyltrialkoxysilane durch sauer katalysierte Hydrolyse (pH = 3) hergestellt. Zu dieser Lösung wird das durch einen Überschuß an Alkalihydroxid in Lösung gebrachte Alkalialuminat gegeben. Die jeweils eingesetzten Mengen und die Stabilitätsdauer gehen aus der Tabelle 1 hervor.

**Tabelle 1**

| Beispiel | Methyltrimethoxysilan [g] | Wasser [g] | Al₂O₃ [g] | Na₂O [g] | Stabilität |
|---|---|---|---|---|---|
| 1 (Vergleichsbeispiel) | 25 | 100 | - | - | 2 h 55 min |
| 2 (Vergleichsbeispiel) | 25 | 200 | - | - | 5 h 10 min |
| 3 | 25 | 75,20 | 1,90 | 1,53 | 10 Tage |
| 4 | 25 | 100 | 1,90 | 1,53 | mehr als 6 Monate |
| 5 | 25 | 125 | 1,27 | 1,02 | mehr als 6 Monate |
| 6 | 25 | 100 | 1,88 | 1,52 | mehr als 1 Monat |
| 7 (Vergleichsbeispiel) | 25 | 100 | 0,94 | 1,33 | 1 h |

### Beispiel 8

Eine Mischung von 8 g Propyltrimethoxysilan und 32 g Methyltrimethoxysilan wird in 160 g Wasser bei pH 3 gelöst. Dazu werden 11 ml einer Natriumaluminat-Lösung mit 22,9 Gew.-% Al₂O₃ und 18 Gew.-% Na₂O (Dichte der Lösung 1,50 g/cm³) gegeben. Die Stabilität der Lösung ist ca. 3 Tage.

### Beispiel 8 A (Vergleichsbeispiel)

Für den gleichen Ansatz wie in Beispiel 8, aber ohne Zusatz der Aluminat-Lösung, beträgt die Stabilität nur ca. 1 h 30 min.

### Beispiel 9

Eine Mischung von 4 g Propyltrimethoxysilan und 36 g Methyltrimethoxysilan wird in 160 g Wasser bei pH 3 gelöst. Dazu werden 11 ml einer Natriumaluminat-Lösung mit 22,9 Gew.-% Al₂O₃ und 18 Gew.-% Na₂O (Dichte der Lösung 1,50 g/cm³) gegeben. Die Stabilität der Lösung ist mehr als 1 Monat.

### Beispiel 9 A (Vergleichsbeispiel)

Für den gleichen Ansatz wie in Beispiel 9, jedoch ohne Zusatz der Aluminat-Lösung, beträgt die Stabilität ca. 2 h 30 min.

### Beispiel 10

20 g Methyltrimethoxysilan werden in 100 g Wasser bei pH 3 gelöst. Es werden 5 ml einer Kaliumaluminat-Lösung mit 22,25 Gew.-% Al₂O₃ und 28,34 Gew.-% K₂O (Dichte der Lösung 1,57 g/cm³) zugegeben. Die Stabilität der Lösung ist mehr als 3 Monate.

### Beispiel 11

Eine nach Beispiel 4 hergestellte Lösung wird 4 h am Rückfluß zum Sieden erhitzt. Die Lösung trübt leicht ein, ist aber ohne Ausfällung über mehr als 3 Monate stabil.

## Patentansprüche

1. Lagerstabile wäßrige Lösung von Alkyltrialkoxysilanen der allgemeinen Formel
R-Si(OR')₃,
in der R für einen aliphathischen Rest mit 1 bis 8 Kohlenstoffatomen und R' für einen aliphatischen Rest mit 1 bis 4 Kohlenstoffatomen steht, **dadurch gekennzeichnet**, daß der Lösung als Stabilisatoren Alkalialuminat und Alkalimetallhydroxid zugesetzt sind, das Molverhältnis des Lösungsmittels Wasser zum gelösten Alkyltrialkoxysilan, angegeben als SiO₂, größer als 22 ist und das Molverhältnis von gelöstem Alkyltrialkoxysilan, angegeben als SiO₂, zu der in Lösung befindlichen Menge Alkalialuminat, angegeben als Al₂O₃, kleiner oder gleich 17 ist.

2. Wäßrige Lösung nach Anspruch 1, dadurch gekennzeichnet, daß ein Gemisch von Alkyltrialkoxysilanen vorliegt.

3. Wäßrige Lösung nach Anspruch 1 oder 2, dadurch gekennzeichnet, daß als Alkyltrialkoxysilan überwiegend ein Methyltrialkoxysilan eingesetzt wird.

## Claims

1. Storage stable aqueous solution of alkyltrialkoxysilanes of the general formula
R-Si(OR')₃ ,
in which R stands for an aliphatic residue with 1 to 8 carbon atoms and R' for an aliphatic residue with 1 to 4 carbon atoms, **characterised in that** alkali aluminate and alkali metal hydroxide are added to the solution as stabilisers, the molar ratio of the solvent water to the dissolved alkyltrialkoxysilane, expressed as SiO₂, is greater than 22 and the molar ration of dissolved alkyltrialkoxysilane, expressed as SiO₂, to the amount of alkali aluminate, expressed as Al₂O₃, to be found in solution, is less than or equal to 17.

2. Aqueous solution according to claim 1, **characterised in that** a mixture of alkyltrialkoxysilanes is present.

3. Aqueous solution according to claim 1 or 2, **characterised in that** a methyltrialkoxysilane is employed predominantly as alkyltrialkoxysilane.

## Revendications

1. Solution aqueuse,stable au magasinage, d'alkyltrialcoxysilanes de formule générale :
R - Si (OR')₃ ,
dans laquelle R représente un reste aliphatique comportant 1 à 8 atomes de carbone et R' représente un reste aliphatique comportant 1 à 4 atomes de carbone , caractériséeen ce qu'on ajoute à la solution ,à titre de stabilisants , un aluminate alcalin et de l'hydroxyde de métal alcalin ; la rapport molaire entre le solvant eau, et l'alkyltrialcoxysilane dissous, indiqué en SiO₂ ,est supérieur à 22, et le rapport molaire entre l'alkyltrialcoxysilane dissous , indiqué en SiO₂, et la quantité d'aluminate alcalin se trouvant en solution, indiquée en Al₂O₃ ,est inférieur ou égal à 17 .

2. Solution aqueuse selon la revendication 1 , caractérisée en ce qu'elle comporte un mélange d'alkyltrialcoxysilanes .

3. Solution aqueuse selon la revendication 1 ou 2 , caractérisée en ce qu'on utilise comme alkyltrialcoxysilane une quantité prédominante d'un méthyltrialcoxysilane .
